# EUROPÄISCHE PATENTANMELDUNG

(11) **EP 2 453 231 A2**
(43) Veröffentlichungstag der Anmeldung: **16.05.2012**
(21) Anmeldenummer: 11187151.3
(22) Anmeldetag: 28.10.2011
(51) Int. Cl.: G01N 30/00

(54) **Hohlfaseranschluss**

(30) Priorität: 12.11.2010 DE 102010043877
(71) Anmelder: Wyatt Technology Europe Gmbh, 56307 Dernbach (DE)
(72) Erfinder: Rösch, Ulrich, 56317 Urbach (DE); Jevdokimov, Wladimir, 56072 Koblenz (DE)
(74) Vertreter: Eisenführ, Speiser & Partner

(57) **Zusammenfassung**

Die vorliegende Erfindung betrifft einen Hohlfaseranschluss (1) zur radialen Abdichtenden Verbindung zwischen einer Hohlfaser (50) und einem Verbindungselement (30) bzw. zwischen der Hohlfaser (50) und einem Gehäuse (40), insbesondere bei einer Vorrichtung zur Feldflussfraktionierung. Hierbei ist die Hohlfaser (50) in einem Gehäuseanschluss (41) des Gehäuses (40) angeordnet. Eine Abdichtung der Hohlfaser (50) gegenüber dem Verbindungselement (30) bzw. dem Gehäuse (40) sowie gegenüber der Umgebung kann erfindungsgemäß dadurch erzielt werden, dass ein Ringelement (20) und ein Verbindungselement (30) mittels eines Anschlussteils (10) zu dem Gehäuse (40) bzw. der Hohlfaser (50) gekoppelt werden, und dass der Hohlfaseranschluss (1) eine Abdichtung über einen Abschnitt (35) zwischen der Hohlfaser (50) und dem Verbindungselement (30) erzielt, welcher durch axiales Verschieben des Ringelements (20) gegenüber dem Verbindungselement (30) erzeugt wird.

## Beschreibung

Die vorliegende Erfindung betrifft einen Hohlfaseranschluss für ein Ende einer für eine Feldflussfraktionierung vorgesehenen Hohlfaser, mit einem Verbindungselement, das eine Durchgangsöffnung zur Aufnahme des Endes der Hohlfaser aufweist.

In einer Vorrichtung zur Feldflussfraktionierung, in der eine Hohlfaser zum Einsatz kommt, übernimmt die Hohlfaser die Funktion eines Trennkanals und werden Proben aus Stoffgemischen sowie Lösungsmittel gewöhnlich über einen Standard-Anschluss der Hochleistungsflüssigkeitschromatographie (HPLC) der Hohlfaser zugleitet bzw. aus der Hohlfaser abgeleitet. Die Hohlfaser ist in einem rohrförmigen Gehäuse bzw. einer Kartusche angeordnet, so dass das Gehäuse bzw. die Kartusche die Hohlfaser in einem radialen Abstand umschließt und dadurch zwischen der Außenseite der Hohlfaser und der Innenseite des Gehäuses bzw. der Kartusche ein Volumen gebildet wird.

Hierbei tritt ein s.g. Crossflow auf, welcher hier mit Querstrom bezeichnet werden soll, und welcher z.B. aufgrund eines innerhalb der Hohlfaser erzeugten Überdrucks in Form von gefiltertem Fluid auftritt, das aus der Hohlfaser in das Gehäuse austritt. Das den Querstrom bildende Fluid darf nicht verunreinigt werden, und somit ist eine leckdichte Abdichtung der Hohlfaser, insbesondere der äußeren Mantelfläche der Hohlfaser gegenüber der Umgebung erforderlich.

Eine Schwierigkeit bei der Abdichtung einer Hohlfaser besteht darin, einen Kompromiss zwischen der Dichtheit der Verbindung und der Belastung der Hohlfaser zu finden, denn Hohlfasern weisen eine vergleichsweise dünne Wandstärke und damit eine hohe Fragilität auf. Eine Abdichtung an dem Anschluss der Hohlfaser zum Gehäuse muss zum einen ausreichen, eine Leckage zwischen der Hohlfaser und dem Gehäuse sicher zu verhindern, darf aber zum anderen keine zu große Krafteinwirkung mit sich bringen, damit die innere Mantelfläche der Hohlfaser keine zu starke Querschnittsverengung erleidet und dadurch brechen oder aufreißen könnte.

Beispielsweise können Kapillarverbindungen vorgesehen werden, um diesen Kompromiss möglichst gut zu realisieren. Damit wird die Hohlfaser jedoch stark punktuell belastet, insbesondere an deren Anfang und Ende. Auch verwirbelt die dadurch hervorgerufene Verengung des Faserinnendurchmessers die Probe beim Ein- und Auslass. Zudem verschlechtert dies eine präzise Fokussierung an der Einlassseite, insbesondere gemäß einer flussbedingten Aufstellung der Probe am gewünschten Startpunkt nahe der Wandung der Hohlfaser. Nachteiligerweise werden auf der Auslassseite bereits getrennten Fraktionen bei derartigen Verengungen erneut durchwirbelt, und Bandenverbreiterung und unsymmetrische Peaks treten auf.

Es ist eine Aufgabe der vorliegenden Erfindung, einen Anschluss für eine Hohlfaser bereitzustellen, der eine sichere dichtende Verbindung gewährleisten kann. Auch ist eine Aufgabe, einen Anschluss bereitzustellen, mit welchem eine fragile Hohlfaser bei moderater Querschnittsverkleinerung und damit moderater Beanspruchung der Faser fixiert werden kann. Ferner ist es eine Aufgabe, mit dem Anschluss eine reproduzierbare Fixierung und Abdichtung der Hohlfaser zu gewährleisten. Nicht zuletzt stellt sich auch als Aufgabe, einen Anschluss bereitzustellen, bei welchem eine zu starke Querschnittsverengung der Hohlfaser weitgehend ausgeschlossen werden kann.

Die voranstehende Aufgabe kann gelöst werden durch einen Hohlfaseranschluss für ein Ende einer für eine Feldflussfraktionierung geeigneten Hohlfaser, mit einem Verbindungselement, das eine Durchgangsöffnung zur Aufnahme des Endes der Hohlfaser aufweist. Erfindungsgemäß wird dazu vorgeschlagen, ein am Verbindungselement montierbares Ringelement vorzusehen, wobei das Ringelement und das Verbindungselement derart gestaltet sind, dass die Montage des Ringelementes am Verbindungselement eine Verkleinerung des Querschnittes der Durchgangsöffnung im Verbindungselement für eine dichtende Verbindung des Endes der Hohlfaser mit einem die Durchgangsöffnung begrenzenden Abschnitt des Verbindungselementes bewirkt.

Erfindungsgemäß kann die Faser über einen radialen Druck abgedichtet werden, insbesondere über eine Art Klemmdruck bzw. Presskraft. Dabei darf der Querschnitt der Faser aber nicht stark verändert werden. Die Schwierigkeit besteht wie bereits angedeutet darin, die fragile Hohlfaser so abzudichten, dass die zu untersuchende Fluid-Probe nicht in den Querstrom gelangen kann und das Gehäuse bzw. die Kartusche nach außen hin keine Leckage aufweist. Es ist also der optimale Kompromiss zwischen maximaler Halte- und Dichtwirkung und minimaler Querschnittsverengung zu finden. Je dünner oder poröser die Hohlfaser dabei ausgeführt ist, desto schwieriger wird es, den Anschluss auszulegen oder sachgerecht ohne allzu viele Hilfsmittel oder Spezialwerkzeug zu montieren. In diesem Zusammenhang sei angemerkt, dass aufgrund der Tatsache, dass eine Hohlfaser der hier in Rede stehenden Art permeabel, also flüssigkeits- und gasdurchlässig, ist, eine solche Hohlfaser nicht mit Kapillaren oder Rohrmaterial im engeren Sinne zu verwechseln ist.

Bei einem erfindungsgemäßen Anschluss kann mittels eines Rings bzw. Ringelements, insbesondere einer Art Konus-Pressring, auf das Verbindungselement eine Presskraft ausgeübt werden, welche gezielt auf einen Abschnitt, in welchem eine radiale Abdichtung erfolgen soll, ausgerichtet werden kann. Ringelement und Verbindungselement können dabei zusammen von einem Anschlussteil gegen das Ende eines Gehäuses bzw. rohrartigen Gehäuseteils gedrückt werden.

Bei der Erfindung kann also eine Hohlfaser dadurch auf sichere Weise abgedichtet werden, dass die von außen auf die Faser wirkende Kraft zur Abdichtung, z.B. in Form eines Klemmdrucks, mit einem richtigen Betrag vorbestimmt werden kann. Dies ist besonders für Hohlfasern aus Kunststoffen bzw. Polymeren als Trägermaterial von Vorteil, welche vorsichtig gehandhabt werden müssen, und bei welchen das Trägermaterial auch eine gewisse Porosität aufweisen kann, wobei die Hohlfasern auch aus einem Kunststoffträger mit zumindest außenseitig aufgebrachter Ultrafiltrationsmembran ausgeführt sein können. Über die Porosität kann eingestellt werden, ob und in welchem Maße die Hohlfaser in radialer Richtung quer zu ihrer Faserlängsachse für ein Fluid oder bestimmte Fluidbestandteile permeabel ist. Ein weiterer Vorteil der Erfindung ist darin zu sehen, dass auf jede Art von Klebern, Kitmassen oder sonstigen Haftvermittlern verzichtet wird, da diese oder die darin enthaltenen Hilfsstoffe durch das bei der Messung notwendige Laufmittel freigesetzt werden und dann die Detektoren beschädigen können.

Das Ringelement kann in montiertem Zustand im Wesentlichen in Faserlängsachse aufgeschoben, aufgedreht oder aufgesetzt auf dem Verbindungselement angeordnet sein. Der Abschnitt kann in montiertem Zustand im Wesentlichen über den gesamten Umfang außen in Anlage zum Hohlfaserende gebracht werden, also über den gesamten Umfang außen an der Hohlfaser anliegen, insbesondere wenn es sich um eine rotationssymmetrische Durchgangsöffnung handelt. Ferner kann das Ringelement in Bezug auf die Faserlängsachse in einer Lage angeordnet sein, welche im Wesentlichen zentrisch zu der Lage des Abschnitts ist, d.h., wenn das Ringelement z.B. breiter ist als der Abschnitt, so überlappt es in montiertem Zustand den Abschnitt in beiden Richtungen entlang der Faserlängsachse in etwa in gleichem Maße.

Gemäß einem Ausführungsbeispiel ist der Hohlfaseranschluss so ausgebildet, dass die in montiertem Zustand des Ringelements auf das Verbindungselement wirkenden Kräfte im Wesentlichen radial zur Faserlängsachse in Richtung auf das Ende der Hohlfaser ausgerichtet sind. Somit können durch die dichtende Verbindung auf die Hohlfaser wirkende Kräfte in Einbaulage des Ringelements im Wesentlichen in radialer Richtung ausgerichtet sein. Im Wesentlichen in radialer Richtung bedeutet, dass das Ringelement in erster Linie über radiale Kräfte eine abdichtende Verbindung sicherstellt. Das Ringelement kann als Konus-Pressring oder auch z.B. als Schneidring aus Edelstahl ausgeführt sein. Ein Pressring wirkt dabei im Wesentlichen dadurch, dass er eine Verformung der Fläche hervorruft, auf welche er montiert wird, und ein Schneidring kann zusätzlich dadurch wirken, dass er sich in die Fläche einarbeitet.

Gemäß einem Ausführungsbeispiel weist das Verbindungselement einen ersten Bereich, insbesondere einen in Einbaulage anschlussseitigen Bereich auf, welcher als Radialdruckbereich bezeichnet werden kann, und welcher dazu ausgebildet ist, radiale Druckkräfte auf die Hohlfaser zu übertragen. Ferner kann das Verbindungselement einen zweiten Bereich, insbesondere einen in Einbaulage gehäuseseitigen zweiten Bereich aufweisen, welcher auch als Positionierbereich bezeichnet werden kann. Somit kann ein Verbindungselement mindestens die beiden Funktionen Abdichten der Faser und Positionieren des Verbindungselementes in einem Gehäuse übernehmen, insbesondere räumlich getrennt voneinander, was Vorteile bei der Genauigkeit einer Zentrierung und Abdichtung der Faser bietet. Denn hierdurch können z.B. radiale und axiale Kraftflüsse weitgehend unabhängig voneinander auf das Verbindungselement wirken. Axiale Kräfte fließen dabei erfindungsgemäß nicht über den ersten Bereich, in welchem die abdichtende Verbindung sichergestellt werden soll, sondern werden im Wesentlichen über den zweiten Bereich geleitet.

Anschlussseitig bedeutet hier, dass bei dem Ringelement oder dem Anschlussteil oder dem Verbindungselement diejenige Seite gemeint ist, welche in Einbaulage weg von einem Gehäuse weist, also weg von z.B. einer Fraktionier-Vorrichtung. Gehäuseseitig bedeutet das Gegenteil, bezieht sich also auf eine Seite des Ringelements, Anschlussteils oder Verbindungselements, welche in Einbaulage zum Gehäuse bzw. zu einer Kartusche einer Fraktionier-Vorrichtung hin weist. Gemäß einem Ausführungsbeispiel ist das Verbindungselement zumindest im ersten Bereich mit einem kompressiblen Material ausgeführt, insbesondere gegenüber radialen Druckkräften. Allerdings sollte dieses Material weniger kompressibel als das Material einer abzudichtenden Hohlfaser, darf aber wiederum nicht zu weich sein, so dass eine dichtende Klemmfunktion auch dann erfüllt werden kann, wenn das Material der Hohlfaser selbst auch recht druckbeständig ist. Das Material des ersten Bereichs darf auch deshalb nicht zu weich sein, damit weitgehend unabhängig vom Material der Hohlfaser definiert werden kann, in welchem Maße eine Verkleinerung des Durchmessers stattfinden soll.

Ferner sollte bevorzugt das Material weitgehend inkompressibel bzw. unverformbar gegenüber axialen Kräften in Richtung der Faserlängsachse sein. Dadurch kann auch bei einer größeren auf das Ringelement wirkenden Verspannkraft sichergestellt werden, dass eine Hohlfaser nicht gestaucht bzw. in Faserlängsachse auf Druck beansprucht wird. Das Verbindungselement kann zumindest teilweise aus Kunststoff bestehen, insbesondere im ersten Bereich.

Das Verbindungselement kann also aus einem durch radiale Druckkräfte verformbaren Material ausgeführt sein und ferner so ausgebildet sein, dass eine radiale Verformung aufgrund einer im Wesentlichen radialen Kraft auf den ersten Bereich sich im Wesentlichen nur im ersten Bereich auswirkt und weitgehend wirkungslos ist in Bezug auf die Lage und Ausrichtung des zweiten Bereichs. Diese Wirkung kann zusätzlich oder alternativ beispielsweise auch durch eine bestimmte geometrische Anordnung des ersten Bereiches und des zweiten Bereiches zueinander erzielt werden, wobei die Bereiche jeweils spezifische Wandstärken aufweisen können, der erste Bereich insbesondere eine höhere Wandstärke als der zweite Bereich. Auch kann auf diese Weise durch die geometrischen Verhältnisse vom Ring- bzw. Verbindungselement bestimmt werden, wie stark eine Hohlfaser im Bereich des Abschnitts der Durchgangsöffnung eingeengt werden soll.

Gemäß einem Ausführungsbeispiel weist das Verbindungselement im ersten Bereich einen Zwischenbereich auf, welcher untenstehend noch weiter erläutert wird, und welcher auf Biegung beansprucht werden kann, so dass bei Montage des Ringelements zwar der erste Bereich in radialer Richtung verformt werden kann, sich diese Verformung jedoch aufgrund der Biegsamkeit bzw. Flexibilität des Zwischenbereichs nicht auf den zweiten Bereich überträgt. Der zweite Bereich kann also unabhängig von einer Verformung in dem ersten Bereich formbeständig sein.

Gemäß einem Ausführungsbeispiel ist der die Durchgangsöffnung begrenzende Abschnitt im Wesentlichen vollständig in dem ersten Bereich enthalten, so dass eine radiale Verformung im ersten Bereich in Bezug auf die Lage und Ausrichtung des zweiten Bereichs weitgehend wirkungslos ist. Hierdurch können die Funktionen des Abdichtens bzw. Zentrierens der Faser in dem Verbindungselement und des Positionierens des Verbindungselements an einem rohrartigen Gehäuseteil voneinander getrennt sichergestellt werden, selbst wenn das Verbindungselement mit nur einem einzigen Anschlussteil bzw. Adapter montiert wird, z.B. mit einer Kartusche verspannt wird. Der Abschnitt kann ferner räumlich dadurch von dem zweiten Bereich getrennt angeordnet sein, dass ein Zwischenbereich vorgesehen ist, in welchen der Abschnitt nicht hineinragt.

Gemäß einem Ausführungsbeispiel ist der die Durchgangsöffnung begrenzende Abschnitt in der anschlussseitigen Hälfte des ersten Bereichs angeordnet, so dass sich eine deutliche räumliche Trennung der Funktionen Abdichten und Positionieren realisieren lässt. Anschlussseitig bedeutet hier in Einbaulage in Richtung eines Anschlussteils, welches auf das Ringelement wirkt.

Erfindungsgemäß kann das Ringelement in Einbaulage durch das Verbindungselement auf Zug in radialer Richtung beansprucht werden, wobei die Zugkraft bewirkt, dass das Ringelement eine Reaktions-Kraft in radialer Richtung zur Hohlfaser auf den ersten Bereich des Verbindungselements ausübt.

Das Verbindungselement kann aus einem Material ausgeführt sein, welches nachgiebiger bzw. weicher ist als das Material, aus welchem das Ringelement ausgeführt ist. Diese Abhängigkeit der Materialeigenschaften bezieht sich vor allem auf die Festigkeit in radialer Richtung, denn die durch ein Aufschieben auf das Verbindungselement im Ringelement erzeugten Spannungen sollen zu einer radialen Verformung der Durchgangsöffnung führen.

Gemäß einem Ausführungsbeispiel weist das Ringelement zumindest über einen Teilabschnitt eine Innenfläche auf, die sich konisch aufweitet, so dass ein Innenkonus gebildet ist, welcher in Montagerichtung bzw. in Einbaulage zu dem Verbindungselement weist. Mit anderen Worten kann das Ringelement als Konus-Pressring mit einer Pressfläche ausgeführt sein. Die dadurch gebildete konische Innenfläche weitet sich nach außen auf und ist gegenüber einer Symmetrieachse bzw. Mittellängsachse des Ringelements radial nach außen geneigt und an derjenigen Seite des Ringelements vorgesehen, mit welcher das Ringelement in Kontakt mit dem Verbindungselement gebracht wird. Hierdurch kann eine auf den Abschnitt, d.h. auf den Klemmbereich bzw. Abdichtbereich fokussierte Presskraft hervorgerufen werden. Um zu vermeiden, dass sich das Ringelement gegenüber dem Verbindungselement verdreht, können sowohl das Ringelement an seiner Innenfläche als auch das Verbindungselement an seiner Außenseite beispielsweise im Wesentlichen in axialer Richtung verlaufende Rillen oder Riefen aufweisen.

Die Kraft, welche das Ringelement bei einem Verbinden des Anschlussteils zu einem rohrartigen Gehäuseteil auf das Verbindungselement ausübt, setzt sich aus einer axialen und einer radialen Komponente zusammen, wobei die radiale Komponente größer ist als die axiale Komponente, so dass sich ein Kraftvektor ergibt, welcher gegenüber einer Ebene orthogonal zu der Längsachse des Verbindungselements nur um einen kleinen Winkel, insbesondere im Bereich von etwa 5 bis 30 Grad, geneigt ist, und wobei die Größe der radialen Komponente über den Winkel des Innenkonus gegenüber der Längsachse des Ringelements definiert ist. Die radiale Komponente des Kraftvektors kann also mit kleiner werdendem Winkel des Innenkonus im Verhältnis zur axialen Komponente größer werden.

Das Ringelement bzw. der Ring kann derart ausgelegt sein, dass der sich aus einer axialen und einer radialen Komponente zusammensetzende Kraftvektor im Wesentlichen orthogonal zu einer an der Innenseite des Ringelements bzw. Ringes ausgebildeten und als Pressfläche dienenden konischen Innenfläche ausgerichtet ist. In diesem Falle wird die Richtung des Kraftvektors also im Wesentlichen durch die Neigung der konischen Innenfläche bestimmt, während sich ein in Einbaulage parallel zu der Faserlängsachse ausgerichteter Teil der Pressfläche nicht spürbar auf die Kraftrichtung auswirkt.

Auf diese Weise kann eine kleb- und schmierstofffreie abdichtende Verbindung erzeugt werden, welche nach dem Prinzip der schiefen Ebene wirken kann, d.h., ein Konuswinkel des Ringelements kann in derartiger Form ausgelegt sein, dass der auf die Faser über die Radialdichtung bzw. das Verbindungselement ausgeübte Druck gleichförmig über die Berühr- bzw. Pressfläche aufgebracht wird. Eine spürbare punktuelle Querschnittverengung oder ein Einschneiden in eine fragile Membranoberfläche im Inneren der Faser kann auf diese Weise wirkungsvoll vermieden werden.

Gemäß einem Ausführungsbeispiel ist die konische Innenfläche in einem Winkel kleiner 45 Grad gegenüber einer Längsachse des Ringelements geneigt, insbesondere in einem Winkel im Bereich von 5 bis 30 Grad. Die Längsachse kann auch als eine durch den Mittelpunkt des Ringelements verlaufenden Mittellängsachse bezeichnet werden. Die Mittellängsachse kann eine Symmetrieachse des Ringelementes sein, insbesondere für den Fall, dass das Ringelement als rotationssymmetrischer Ring ausgeführt ist. Das Ringelement kann aber grundsätzlich auch eine beliebige Geometrie aufweisen, insbesondere auch eine von der Kreisform abweichende Geometrie.

Das Verbindungselement kann eine Außenfase aufweisen, welche in einem Winkel gegenüber der Längsachse des Verbindungselements angeordnet ist, der im Wesentlichen dem Winkel des Innenkonus des Ringelements entspricht. Die Außenfase ist an derjenigen Seite vorzusehen, von welcher das Ringelement mit dem Verbindungselement in Kontakt zu bringen ist und zur Anlage auf einer Anlagefläche des Verbindungselements zu bringen ist. Hierdurch können Verbindungselement und Ringelement auf einfache Weise miteinander gekoppelt werden, insbesondere ohne Werkzeug oder irgendwelche Haltevorrichtungen, was die Montage erleichtert. Die Lage des Ringelementes auf dem Verbindungselement ist dadurch weitgehend eindeutig definierbar, so dass ein Verkanten bei einem Verschieben des Ringelementes gegenüber dem Verbindungselement weitgehend ausgeschlossen werden kann. Das Ringelement kann also auf einfache Weise an das Verbindungselement gekoppelt werden, bevor ein Anschlussteil oder dergleichen an das rohrartige Gehäuseteil geschraubt wird und das Ringelement mittels eines Anschlussteils auf das Verbindungselement geschoben und gepresst wird.

Das Ringelement kann eine axiale Länge in Richtung der Faserlängsachse aufweisen, welche größer ist als die Breite einer ersten Mantelfläche bzw. Gegendruckfläche des Verbindungselements in dem ersten Bereich, wobei die erste Mantelfläche des Verbinders der Fläche bzw. Flächen entspricht, über welche das Ringelement auf das Verbindungselement wirkt bzw. auf diesem zur Anlage kommt. Hierdurch kann sichergestellt werden, dass ein Anschlussteil unabhängig von der Art der Montage nicht in Kontakt mit dem Verbindungselement gerät. Auch kann sichergestellt werden, dass die aufzubringende Radialkraft auch tatsächlich aufgebracht wird, also dass das Ringelement nicht an einer falschen Position auf einer ersten Mantelfläche des Verbindungselementes positioniert wird, sondern auch tatsächlich bis zu einer Anlagefläche an das Verbindungselement geschoben wird. Ferner kann sichergestellt werden, dass die radiale Druckkraft über die gesamte axiale Länge übertragen werden kann, und dass die erste Mantelfläche sich nicht wieder aufweitet. Dies könnte passieren, wenn das Ringelement kürzer, d.h. weniger breit ist als die erste Mantelfläche des Verbindungselementes, und dadurch würde ein auf die Hohlfaser ausgeübter Druck an dieser Stelle gemindert. Es mag jedoch auch Fälle geben, in denen es von Vorteil ist, das Ringelement weniger breit ist als die erste Mantelfläche auszuführen, damit der auf die Hohlfaser ausgeübte Druck im Randbereich nach außen hin schwächer wird, z.B. um einen stetigen, sanften Übergang zu dem Abschnitt an der Durchgangsöffnung zu schaffen und die Hohlfaser besonders schonend einzuklemmen.

Gemäß einem Ausführungsbeispiel weist das Verbindungselement in dem die Durchgangsöffnung begrenzenden Abschnitt einen Steg oder vergleichbar geformten Vorsprung auf, welcher eine erste Dichtfläche definiert, die so ausgebildet ist, in montiertem Zustand des Ringelements am Verbindungselement an einer äußeren Mantelfläche einer Hohlfaser in dichtende Anlage zu gelangen. Mit Hilfe eines solchen Steges bzw. vergleichbar geformten Vorsprunges kann eine Abdichtung besonders gezielt und wirkungsvoll realisiert werden. Auch können durch einen Steg die Funktionen des Zentrierens bzw. des Abdichtens in dem Abschnitt zumindest teilweise voneinander getrennt werden, z.B. indem die erste Dichtfläche vor allem die Dichtfunktion erfüllt und der Rest des an einer Hohlfaser anliegenden Teils des Abschnitts vor allem die Zentrier- und Haltefunktion einer Hohlfaser erfüllt. Nichtsdestotrotz kann eine Hohlfaser in dem Verbindungselement prinzipiell auch allein über die erste Dichtfläche zentriert werden.

Der Steg kann die erste Dichtfläche ferner dahingehend definieren, dass sie eine im Wesentlichen zylindrische Form aufweist, deren Rundheit von einer idealen Zylinderform vorzugsweise um weniger als 2/100 Millimeter abweicht. Dieselben Toleranzgrenzen können ggf. auch für eine zweite Dichtfläche vorgesehen sein, welche in Kontakt mit der Hohlfaser zu bringen ist.

Der Steg kann in axialer Richtung im Wesentlichen mittig im ersten Bereich angeordnet sein. Das Ringelement kann zusammen mit dem Verbindungselement derart ausgelegt sein, dass an dieser Stelle eine definierte, ggf. maximale Presskraft hervorgerufen wird. Im Wesentlichen mittig bedeutet in diesem Zusammenhang, dass der Steg in etwa auf halber Länge in Bezug auf die gesamte Länge des ersten Bereichs entlang der Faserlängsachse angeordnet ist. Der Steg kann auch etwas weiter links in der Hälfte des ersten Bereichs liegen, also entgegen der Montagerichtung, wenn dies für eine verbesserte Trennung der Funktionen Positionieren und Verklemmen bzw. Verpressen von Nutzen ist. An dieser mittigen Stelle des Stegs kann durch das Ringelement in Einbaulage eine in Bezug auf den Abschnitt maximale Presskraft hervorrufen werden, wobei die Stelle maximaler Presskraft durch die Breite der ersten Mantelfläche des Verbinders sowie ferner durch die Breite und den Winkel des Innenkonus des Ringelements definiert sein kann. Die Stelle maximaler Presskraft kann dadurch mit der Lage des Stegs zusammenfallen, dass beispielsweise im Falle der Ausbildung einer konischen Innenfläche an der Innenseite des Ringelementes die am Übergang zwischen der konischen Innenfläche und der Pressfläche erzeugte Presskraft aufgrund eines spezifischen Winkels auf den Steg ausgerichtet ist. Sofern z.B. die Hälfte der Pressfläche konisch geformt ist, kann bevorzugt die Anordnung so getroffen sein, dass in Einbaulage ein resultierender Kraftvektor auch dann noch an der vorgesehenen Stelle auf den Abschnitt wirkt, wenn der Abschnitt in der anschlussseitigen Hälfte des ersten Bereichs angeordnet ist. Erfindungsgemäß kann die Länge des Innenkonus in Abhängigkeit zu der Breite des Ringelements, der Länge einer ersten Mantelfläche des Verbindungselementes sowie der Lage des Abschnittes ausgelegt werden, um den optimalen Kraftwirkungspunkt zu bestimmen.

Neben dem Steg kann in Richtung eines Anschlussteils, also anschlussseitig noch eine zweite Dichtfläche, insbesondere nur noch eine zweite rotationssymmetrische Dichtfläche, vorgesehen sein, welche konzentrisch gegenüber dem Steg angeordnet ist und eine axiale Länge größer oder gleich der Breite des Stegs und einen größeren Innendurchmesser als der Steg aufweisen kann. Diese zweite Dichtfläche kann z.B. auch die Funktion der Zentrierung und Halterung der Hohlfaser übernehmen.

Der Innendurchmesser des Stegs kann kleiner sein als der Innendurchmesser der zweiten Dichtfläche, z.B. im Bereich von 5 bis 20 Prozent, so dass der Steg gegenüber der zweiten Dichtfläche etwa 5 bis 20 Prozent hervortritt.

Gemäß einem Ausführungsbeispiel entspricht die axiale Länge der zweiten Dichtfläche neben dem Steg zumindest annähernd der zweifachen Breite des Stegs. Hierdurch kann anschlussseitig ein sanfter bzw. moderater Übergang von der Einengung einer Faser im Bereich des Stegs zu dem Ende der Hohlfaser geschaffen werden.

Die Hohlfaser kann Druckkräften wie erwähnt in Abhängigkeit ihres Materials, aber auch ihrer Porosität standhalten, so dass es für eine einfach zu handhabende Vorrichtung zur Abdichtung der Hohlfaser von großer Bedeutung ist, dass nicht zu große Druckkräfte auf die Hohlfaser ausgeübt werden. Dies gilt auch für unterschiedliche Hohlfasertypen. Für einen Hersteller stellt sich auch das Problem, einen möglichst universell verwendbaren Anschluss bereitzustellen, bei welchem in Abhängigkeit des Typs der abzudichtenden Hohlfaser nur wenige Änderungen erforderlich sind. Bei einem erfindungsgemäßen Anschluss ist es in den meisten Fällen ausreichend, das Material des Verbindungselements und/oder im Falle der Ausbildung einer konischen Innenfläche an der Innenseite des Ringelementes den Winkel dieser konischen Innenfläche auf die Eigenschaften der Hohlfaser abzustimmen, was die Anzahl an Varianten bzw. unterschiedlichen Anschlüssen reduzieren und eine Auswahl erleichtern kann. Das Ringelement und jedenfalls ein Anschlussteil können dabei in einer ggf. kostenoptimierten Standard-Ausführung eingesetzt werden.

Gemäß einem Ausführungsbeispiel ist an einer radial nach außen weisenden Außenseite des Verbindungselementes ein Absatz angeordnet, der als Anschlag für das Ringelement dient. Der Absatz, z.B. in Form eines radial vorstehenden Vorsprungs, ist in dem zweiten Bereich gebildet. Somit ist die erste Mantelfläche des Verbinders durch den Absatz begrenzt, an welchem das Ringelement in montiertem Zustand bzw. bei dem Verbinden des Anschlussteils zum Gehäuse zur Anlage kommt. Der Anschlag bzw. Absatz dient unter anderem dazu, von dem Ringelement ausgeübte axiale Kräfte aufzunehmen, und er verhindert, dass das Ringelement zu weit auf das Verbindungselement geschoben wird.

Der Absatz kann auch dazu dienen, das Verbindungselement verdrehsicher in einem Gehäuse oder dergleichen zu positionieren. Der Absatz kann also dahingehend ausgebildet sein, in Einbaulage ein auf das Verbindungselement wirkendes Drehmoment in ein rohrartiges Gehäuseteil weiterzuleiten, so dass eine Hohlfaser nicht tordiert wird. Über den Absatz kann also eine verdrehsteife Positionierung des Verbindungselementes in einem Gehäuse sichergestellt werden. Gemäß einem Ausführungsbeispiel ist der Absatz derjenige Teil des Verbindungselementes mit den größten Außenabmessungen in radialer Richtung. Der Absatz kann einen größeren Außendurchmesser aufweisen als irgendein Durchmesser vom Innenkonus des Ringelements. Dadurch kann sichergestellt werden, dass ein Ringelement in jedem Fall, also unabhängig von dem Winkel einer konischen Innenfläche an dem Absatz in Anlage kommen kann.

Erfindungsgemäß wird ferner vorgeschlagen, zusätzlich ein Anschlussteil für eine Kopplung mit einer Vorrichtung zur Feldflussfraktionierung vorzusehen, insbesondere unter Einschluss eines erfindungsgemäßen Ringelements und eines erfindungsgemäßen Verbindungselements. Das Anschlussteil kann an ein rohrartiges Gehäuseteil, das die Hohlfaser aufnimmt und umschließt, gekoppelt werden und durch Zusammenschieben von Ring- und Verbindungselement eine Abdichtung sicherstellen. Das Anschlussteil kann hierfür einen Durchgang, z.B. in Form einer Durchgangsbohrung aufweisen und Ringelement sowie Verbindungselement in Einbaulage in einem Innenraum aufnehmen bzw. umgrenzen. Das Anschlussteil ist im Wesentlichen dazu vorgesehen, axiale Kräfte zwischen dem Gehäuse und dem Ringelement aufzubringen und zu übertragen.

Das Verbindungselement kann in Einbaulage gehäuseseitig ein rohrförmiges Ende mit einem Außendurchmesser aufweisen, welcher gegenüber dem Durchmesser der inneren Mantelfläche des Verbinders nur geringfügig größer ist, so dass das Verbindungselement gehäuseseitig am Ende des zweiten Bereichs einen rohrartigen, dünnwandigen Zentrieranschluss bildet. Durch das rohrförmige Ende bzw. eine Art Zentriervorrichtung können zwei Funktionen des Verbindungselementes voneinander getrennt werden, insbesondere die Funktion einer Zentrierung innerhalb des Gehäuses und die Funktion einer Verdreh-Sicherung. Hierdurch schließt das Verbindungselement z.B. auch in strömungstechnischer Hinsicht gut an einen rohrartigen Gehäuseteil an. Der Zentrieranschluss kann dabei in Einbaulage in das Volumen des Gehäuses eingreifen.

Die auf die Hohlfaser wirkenden Kräfte können, wie zuvor beschrieben, aus einer Verformung des ersten Bereichs des Verbindungselements resultieren, welche durch das Ringelement hervorgerufen wird, wobei das Ringelement in Einbaulage zwischen dem Anschlussteil und dem Verbindungselement angeordnet ist, und wobei das Anschlussteil allein über das Ringelement auf das Verbindungselement und damit auf die Hohlfaser wirkt. Das Ringelement kann in Einbaulage durch den Anschlussteil im Wesentlichen auf Druck in axialer Richtung der Faserlängsachse beansprucht werden. D.h., eine Übertragung von radialen Kräften muss zwischen dem Anschlussteil und dem Ringelement nicht stattfinden.

Erfindungsgemäß wird weiter vorgeschlagen, den Hohlfaseranschluss so auszubilden, dass eine abdichtende Verbindung sowohl zwischen einem Ende der Hohlfaser und dem Verbindungselement als auch zwischen dem Verbindungselement und dem die Hohlfaser aufnehmenden Gehäuse einer Vorrichtung zur Feldflussfraktionierung hergestellt werden kann, indem die abdichtende Verbindung zwischen einem Ende der Hohlfaser und dem Verbindungselement über den die Durchgangsöffnung begrenzenden Abschnitt mittels des Anschlussteils durch axiales Verschieben des Ringelements gegenüber dem Verbindungselement über radial wirkende Kräfte herzustellen ist, und indem eine abdichtende Verbindung zwischen dem Verbindungselement und dem rohrartigen Gehäuseteil über eine vordere Stirnseite des Verbindungselements mit Hilfe axial wirkender Kräfte herzustellen ist.

Hierdurch können allein durch die Montage des Anschlussteils zwei abdichtende Verbindungen hergestellt werden, d.h., es kann nicht nur die Hohlfaser abgedichtet werden, sondern auch ein Volumen zwischen der Hohlfaser und dem Gehäuse. Zusätzlich zu der Abdichtung in dem die Durchgangsöffnung begrenzenden Abschnitt kann also eine abdichtende Verbindung zwischen dem Verbindungselement und dem Gehäuse über ein rohrförmiges Ende und/oder über eine vordere Stirnseite des Verbindungselementes hergestellt werden. Die Hohlfaser kann dazu in einem Anschluss des Gehäuses angeordnet sein, welcher ein Außengewinde aufweisen kann. Die Hohlfaser kann z.B. einen Durchmesser im Bereich von 1,3 mm aufweisen, und sie kann aus einem Kunststoffträger bestehen. Der Kunststoffträger kann eine innen- und außenseitig aufgebrachte Ultrafiltrationsmembran aufweisen. Das Gehäuse kann z.B. einen Hochleistungsflüssigkeitschromatographie (HPLC) Standard-Anschluss aufweisen. Der Gehäuseanschluss kann als Stutzen bzw. Hüllrohr mit einem Außengewinde ausgeführt sein.

Gemäß einem Ausführungsbeispiel ist das Anschlussteil als Anschlussmutter für eine Schraubverbindung mit dem rohrartigen Gehäuseteil ausgeführt, insbesondere mit einem Innengewinde. Die Anschlussmutter kann auf oder in das rohrar-tige Gehäuseteil bzw. den rohrartigen Gehäuseteil geschraubt werden, wobei beim axialen Verschieben des Rings gegenüber dem Verbindungselement entweder eine Relativbewegung zwischen der Anschlussmutter und dem Ringelement oder zwischen dem Ringelement und dem Verbindungselement erfolgt, je nachdem, ob sich das Ringelement mit der Anschlussmutter mitdrehen soll oder nicht.

Gemäß einem Ausführungsbeispiel sind die jeweiligen Oberflächen vom Ringelement, von dem Verbindungselement und von dem Anschlussteil derart ausgeführt, dass eine bei der Montage hervorgerufene Reibkraft zwischen einer hinteren Stirnseite des Ringelements und einer Berührfläche des Anschlussteils kleiner ist als eine zwischen der Pressfläche des Ringelements und einer ersten Mantelfläche des Verbindungselements hervorgerufene Reibkraft. Hierdurch kann sichergestellt werden, dass sich das Ringelement nicht gegenüber dem Verbindungselement verdreht, selbst wenn aufgrund einer Relativdrehung eines Anschlussteils gegenüber dem Ringelement eine Reibkraft übertragen wird. Ein Verkanten des Ringelements gegenüber dem Verbindungselement kann dadurch wirkungsvoll vermieden werden. Als hintere Stirnseite des Ringelements ist dabei eine Fläche des Ringelements aufzufassen, auf welche ein Anschlussteil wirkt, also die Seite des Ringelements, welche in Einbaulage weg von der Vorrichtung bzw. dem Gehäuse weist.

Das Anschlussteil kann wie erwähnt so ausgebildet sein, bei dem Verbinden zum Gehäuse bzw. zur Kartusche eine Kraft in einer Richtung auf das Ringelement auszuüben, die zumindest annähernd parallel zur Faserlängsachse der Hohlfaser ausgerichtet ist. Diese annähernd parallele Richtung kann dadurch sichergestellt werden, dass das Anschlussteil über eine gewisse Strecke erst auf ein Gewinde an dem Gehäuseanschluss aufgeschraubt werden muss, bevor es in Kontakt mit dem Ringelement gerät. Dadurch kann verhindert werden, dass das Ringelement mit dem Verbindungselement verkantet.

Erfindungsgemäß ist ferner eine Fraktioniervorrichtung mit mindestens einem erfindungsgemäßen Hohlfaseranschluss vorgesehen, wobei die Fraktioniervorrichtung die Hohlfaser aufnimmt und die Hohlfaser an einem Ende oder an beiden Enden über den Hohlfaseranschluss abdichtend halten bzw. lagern kann.

Durch die nachfolgende Figurenbeschreibung wird die Erfindung anhand von einem Ausführungsbeispiel noch weiter erläutert. Es zeigen
- Figur 1: eine perspektivische Ansicht von Komponenten eines Hohlfaseranschlusses gemäß einer bevorzugten Ausführung der Erfindung in auseinandergezogener Darstellung;
- Figur 2: eine Schnittansicht von Komponenten des Hohlfaseranschlusses aus Figur 1 in auseinandergezogener Darstellung;
- Figur 3: eine Schnittansicht von Komponenten des Hohlfaseranschlusses aus Figur 1 in montiertem Zustand;
- Figur 4: eine perspektivische Ansicht von Komponenten eines Hohlfaseranschlusses in einer gegenüber Figur 1 ausschnittsweisen Darstellung, wobei ein Verbindungselement und ein Gehäuseanschluss gegenüber dem Verbindungselement und dem Gehäuseanschluss von Figur 1 modifiziert sind;
- Figur 5: eine Schnittansicht von einem Ringelement und einem Verbindungselement gemäß der bevorzugten Ausführung der Erfindung in auseinandergezogener Darstellung;
- Figur 6: eine Schnittansicht von dem Ringelement und dem Verbindungselement aus Figur 3 in montiertem Zustand; und
- Figur 7: eine perspektivische Seitenansicht von zwei Hohlfaseranschlüssen an einer Kartusche, wobei ein Hohlfaseranschluss gemäß der bevorzugten Ausführung in montiertem Zustand und der andere Hohlfaseranschluss in auseinandergezogener Darstellung dargestellt ist.

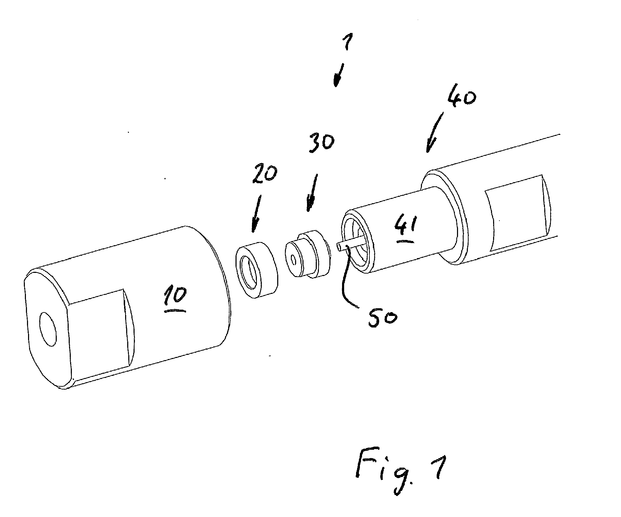

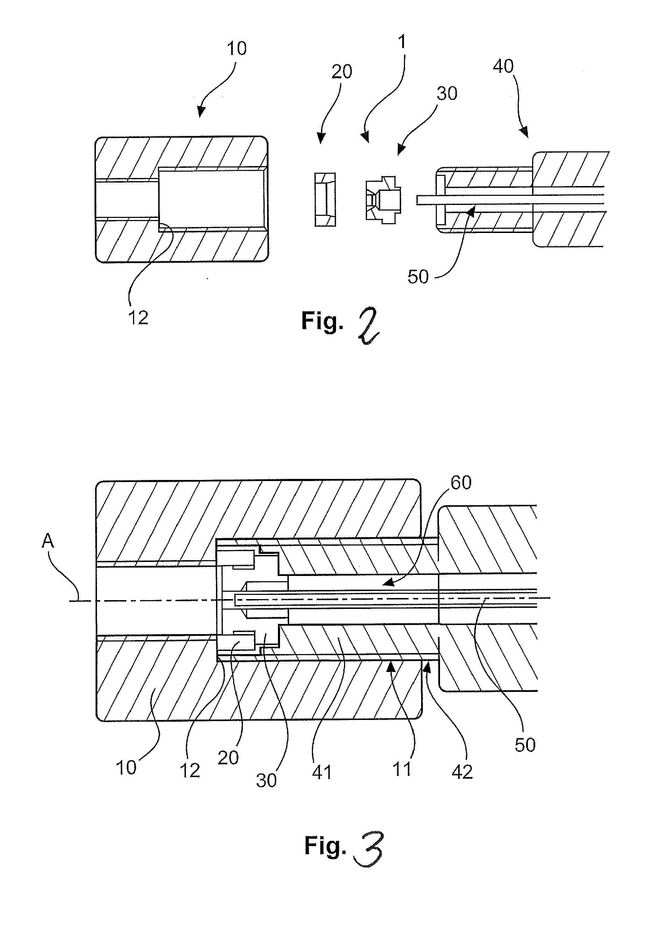

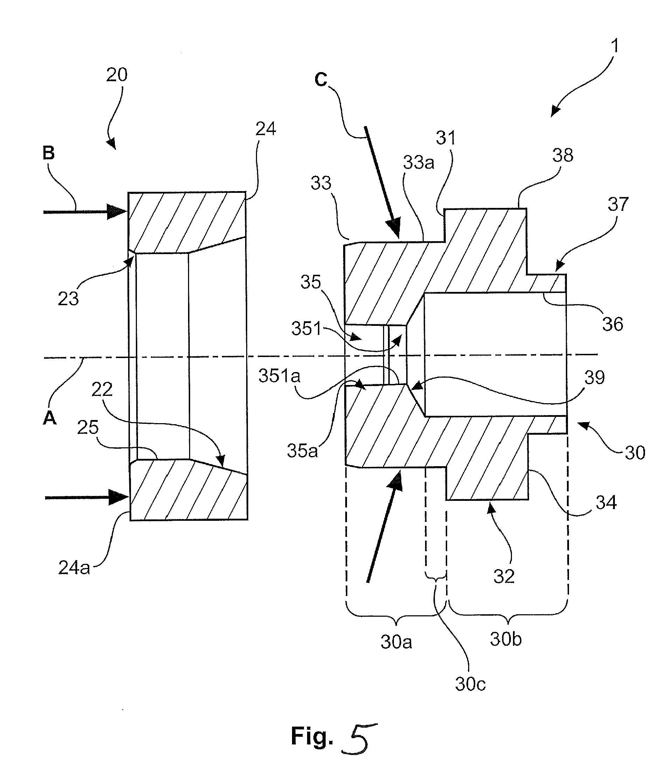

In den Figuren 1 und 2 ist ein Hohlfaseranschluss 1 mit einem Ringelement 20 und einem Verbindungselement 30 erkennbar, und ferner ist ein Anschlussteil 10 gezeigt, welches mit einem Ende eines rohrartigen Gehäuseteils 40 gekoppelt werden kann, um eine Hohlfaser 50 innerhalb des rohrartigen Gehäuseteils 40 zu halten und abdichtend zu positionieren. Das rohrartige Gehäuseteil 40 bildet eine Kartusche, insbesondere nach Art eines Außenrohrs, um eine darin positionierte Hohlfaser 50 abdichtend zu lagern. Das Anschlussteil 10 ist als eine Art Hülse mit einer Durchgangsbohrung ausgeführt und weist eine radiale Fläche 12 an einem inneren Absatz auf, mit welcher es bei Montage des Hohlfaseranschlusses 1 in Anlage an die benachbarte Stirnseite des Ringelementes 20 gelangt. In Fig. 3 ist ferner gezeigt, dass das Anschlussteil 10 ein Innengewinde 11 aufweisen kann, so dass es auf ein Außengewinde 42 eines Gehäuseanschlusses 41 entsprechend dem Außenrohr an dem rohrartigen Gehäuseteil 40 verschraubt werden kann. Dabei wird das Ringelement 20 in Richtung entlang der Faserlängsachse A auf das Verbindungselement 30 getrieben. In Einbaulage überlappt das Anschlussteil 10 dabei wie dargestellt zu einem bedeutenden Teil den Gehäuseanschluss 41 und auch das Verbindungselement 30 sowie das Ringelement 20. Hierdurch kann sichergestellt werden, dass das Anschlussteil 10 im Wesentlichen koaxial zu einer Faserlängsachse A ausgerichtet ist und axial auf das Ringelement 20 wirkt. In Fig. 5 ist diese Wirkrichtung an dem Ringelement 20 durch axiale Pfeile B angedeutet, und radial ausgerichtete Pfeile C deuten an, in welcher Richtung eine Kraft auf eine erste Mantelfläche 33a des Verbindungselementes 30 wirken kann.

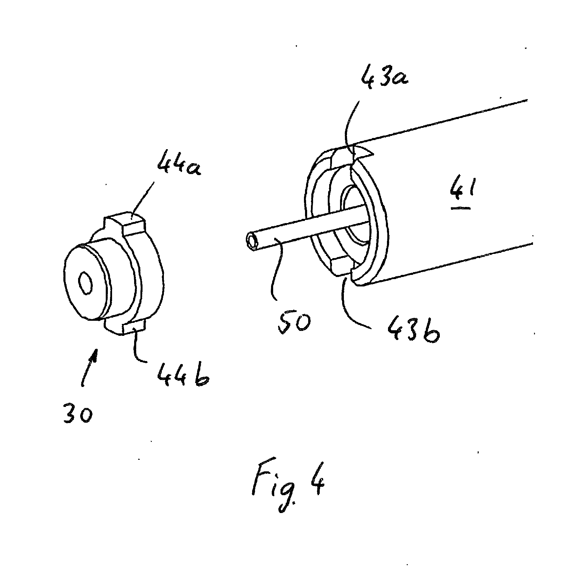

In Abänderung gegenüber der in Fig. 1 dargestellten Ausführung ist in Fig. 4 der zylindrische Gehäuseanschluss 41 des rohrartigen Gehäuseteils 40 mit zwei an seiner Stirnseite ausgebildeten und diametral gegenüberliegenden Aussparungen 43a, 43b und das ringförmige Verbindungselement 30 mit zwei an seiner Peripheriefläche radial nach außen ragenden und diametral gegenüberliegenden Vorsprüngen 44a, 44b gezeigt. Die Vorsprünge 44a, 44b bilden Rastnasen für einen Eingriff in die Aussparungen 43a, 43b an der Stirnseite des Gehäuseanschlusses 41, welche eine zu den Vorsprüngen 44a, 44b komplementäre Form aufweisen. Die Aussparungen 43a, 43b am Gehäuseanschluss 44 und die Vorsprünge 44a, 44b an der Außenseite des Verbindungselementes 30 bilden somit gemeinsam eine Arretierung für eine drehfeste Verbindung des Verbindungselementes 30 mit dem Gehäuseanschluss 41. Somit wird beim Aufschrauben des Anschlussteils 10 auf den Gehäuseanschluss 41 eine Übertragung der Drehbewegung über das Ringelement 20 auf das Verbindungslelement 30 verhindert. Die Ausbildung der Aussparungen 43a, 43b am Gehäuseanschluss 41 und der Vorsprünge 44a, 44b am Verbindungselement 30 ist besonders einfach mit Hilfe einer Spritzgussfertigung möglich, die sich außerdem aus Kostengründen ebenfalls für die Herstellung des rohrartigen Gehäuseteils 40, der für den Hohlfaseranschluss 1 erforderlichen Komponenten und somit auch der Gesamtanordnung bzw. Kartusche als Einwegprodukt empfiehlt. Durch eine Übertragung der Drehbewegung über das Verbindungselement 30 auf die Hohlfaser 50 kann nämlich in ungünstigen Fällen die Hohlfaser 50 tordiert werden, wodurch eine Beschädigung der sensiblen Membranbeschichtung auf der Hohlfaser 50 nicht auszuschließen wäre.

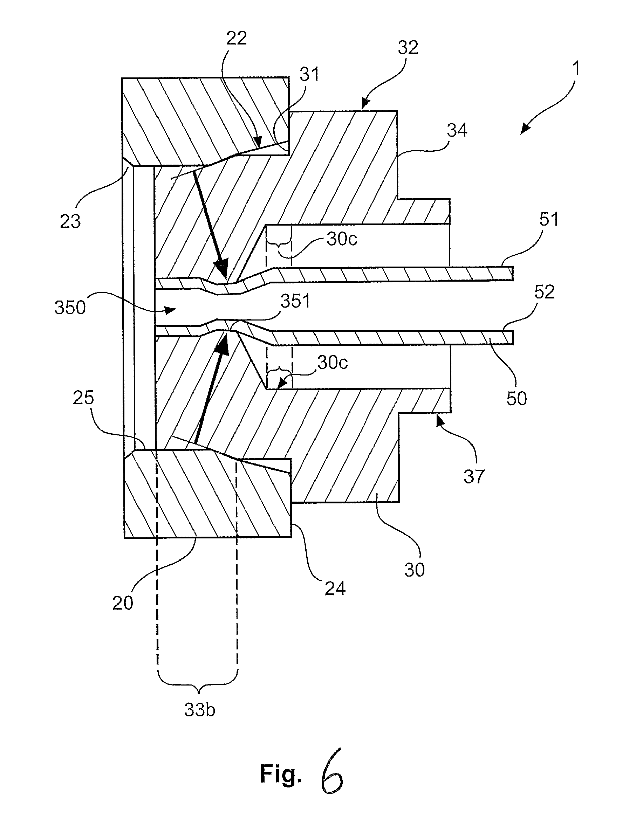

Die Fig. 5 zeigt ferner eine Pressfläche 25 und einen Innenkonus 22 an dem Ringelement 20, und an dem Verbindungselement 30 ist eine Durchgangsöffnung 350 erkennbar, welche durch einen Abschnitt 35 definiert wird und in welcher eine Hohlfaser (vgl. Fig. 3) abdichtend gehalten werden kann. Das Verbindungselement 30 weist ferner einen Absatz 32 mit einer Anlagefläche 31 auf, an welcher das Ringelement 20 in Einbaulage anschlagen bzw. zur Anlage gelangen kann, wie in Fig. 6 gezeigt ist. Das Ringelement 20 liegt an dem Absatz 32 an und überlappt an derjenigen Seite das Verbindungselement 30, an welcher in Einbaulage das Anschlussteil 10 (vgl. Fig. 3) vorgesehen ist. Die Hohlfaser 50 ist in der Durchgangsöffnung 350 eingespannt bzw. eingeklemmt gehalten und wird dabei etwas zusammengedrückt, und zwar zu einem bedeutenden Teil von einem Steg 351.

Es folgt nun unter detaillierterer Bezugnahme auf die Figuren 1 bis 6 eine Beschreibung der Funktionen und Wirkungsweise des dargestellten Hohlfaseranschlusses 1.

Zunächst ist zu erwähnen, dass über das Anschlussteil 10 ein axiales Verspannen des Ringelements 20 und des Verbindungselements 30 mit dem rohrartigen Gehäuseteil 40 erfolgen kann, wobei der von dem Anschlussteil 10 ausgeübte axiale, im Wesentlichen längs der Faserlängsachse A ausgerichtete Kraftfluss über das Ringelement 20 und das Verbindungselement 30 in das Außengewinde 42 des rohrartigen Gehäuseteils 40 geleitet wird, so dass sich eine geschlossene Kraftlinie zwischen der Berührfläche 12 und dem Außengewinde 42 ergibt: Das Ringelement 20 und das Verbindungselement 30 werden auf Druck beansprucht, und das Anschlussteil 10 wird im Wesentlichen auf Zug beansprucht, insbesondere in dem den Gehäuseanschluss 41 überlappenden Bereich. Somit kann über das Anschlussteil 10 eine axiale Kraft über das Ringelement 20 auf das Verbindungselement 30 ausgeübt werden, und es liegt ein Kraftfluss zwischen der Berührfläche 12 des Anschlussteils 10 und dem Außengewinde 42 an dem Gehäuseanschluss 41 vor, welcher in axialer Richtung über das Ringelement 20 und das Verbindungselement 30 fließt. Hierdurch kann bei entsprechend stabiler Auslegung des Ringelements 20 und des Verbindungselements 30 eine große axiale Kraft übertragen werden und eine sichere Dichtverbindung hergestellt werden, insbesondere auch an einer Schnittstelle zwischen dem Verbindungselement 30 und dem Gehäuseanschluss 41, sei es im Wesentlichen über ein rohrförmiges Ende 37 und/oder über eine vordere Stirnseite 34 des Verbindungselements 30, wie in Fig. 5 oder 6 dargestellt. Am direktesten kann die axiale Kraft dabei über die vordere Stirnseite 34 übertragen werden. Nichtsdestotrotz ist es denkbar, sowohl die Mantelfläche des rohrförmigen Endes 37 als auch die vordere Stirnseite 34 bzw. die entsprechenden Kontaktflächen am rohrartigen Gehäuseteil 40 mit einer Oberfläche auszuführen, über welche eine abdichtende Wirkung erzielt werden kann, so dass ein Volumen 60 zwischen der Hohlfaser 50 und dem rohrartigen Gehäuseteil 40 gegenüber der Umgebung abgedichtet werden kann. Das Volumen 60 wird auch zum Teil von dem Verbindungselement 30 gebildet, insbesondere über eine innere Mantelfläche 36, wie in Fig. 3 und 5 gezeigt. Auch kann die Mantelfläche des rohrförmigen Endes 37 bzw. die entsprechende Kontaktfläche am rohrartigen Gehäuseteil 40 leicht konisch ausgeführt sein, so dass sich in Abhängigkeit der aufgebrachten axialen Kräfte ein Presssitz realisieren lässt.

Um nun die eine Hohlfaser 50 abdichtenden Funktion zu erläutern, sei zunächst erwähnt, dass ein erfindungsgemäßer Hohlfaseranschluss 1 trotz der Möglichkeit einer hohen axialen Verspannkraft eine schonende und fein einstellbare Halterung und Abdichtung der Hohlfaser 50 sicherstellen kann. Hierbei zeigt sich, dass bei der bevorzugten Ausführung des dargestellten Verbindungselementes 30 die Funktion einer radialen Abdichtung und Halterung der Hohlfaser 50 von der Funktion einer axialen Abdichtung des Verbindungselementes 30 gegenüber dem rohrartigen Gehäuseteil getrennt werden kann. Hierzu ist im dargestellten Ausführungsbeispiel ein erster Bereich 30a räumlich getrennt von einem zweiten Bereich 30b vorgesehen, und als Übergang zwischen diesen Bereichen kann ein Zwischenbereich 30c vorgesehen sein, welcher von dem ersten Bereich 30a umfasst ist. Im ersten Bereich 30a werden vornehmlich radiale Drücke erzeugt und auf die Hohlfaser 50 übertragen, wobei die Hohlfaser 50 in einem vorbestimmten Maß radial eingeengt werden kann, wie in Fig. 6 gezeigt.

Die Hohlfaser ist mit ihrer äußeren Mantelfläche 51 in dem Abschnitt 35 in der Durchgangsöffnung 350 fixiert und abgedichtet, insbesondere über eine erste Dichtfläche 351a an dem Steg 351 und auch über eine zweite Dichtfläche 35a. Die radiale Druckkraft wird durch das Ringelement 20 hervorgerufen und entlang eines zusammengedrückten Bereichs 33b ausgehend von der ersten Mantelfläche 33a auf den Abschnitt 35 weitergeleitet, insbesondere auch auf den Steg 351. Das Ringelement 20 kann bei der Montage zunächst über den Innenkonus 22 mit dem Verbindungselement 30 gekoppelt werden und zunächst auf einer Außenfase 33 an dem Verbindungselement 30 anliegen. Um das Ringelement 20 in Einbaulage zu bringen, wird über das Anschlussteil 10 eine axiale Kraft auf eine hintere Stirnseite 24a des Ringelements 20 aufgebracht, bis das Ringelement 20 an den Absatz 32 anstößt, also mit einer vorderen Stirnseite 24 des Ringelements 20 an der Anlagefläche 31 anliegt. Durch die Geometrie des Ringelements 20 und die Lage des Absatzes 32 ergibt sich damit in montiertem Zustand der zusammengedrückte Bereich 33b, über welchen eine auf den Abschnitt 35 gerichtete radiale Kraft aufgebracht werden kann. In Fig. 6 ist der zusammengedrückte Bereich 33b an dem Verbindungselement 30 erkennbar, über welchen das Ringelement 20 sowohl mit einem Teil des Innenkonus 22 aus auch einem Teil der sich parallel erstreckenden Pressfläche 25 auf die erste Mantelfläche 33a des Verbinders 30 wirkt.

Im Folgenden erfolgen in chronologischer Reihenfolge detailliertere Erläuterungen zu den Figuren 5 und 6. Die bei der Verpressung wirkenden Kräfte sind durch die entsprechenden Pfeile angedeutet. Insbesondere sind an dem Ringelement 20 die axialen Pfeile B angegeben, welche eine durch ein Anschlussteil (vgl. Fig, 2) aufbringbare Kraft andeuten, und an dem Verbindungselement 30 die radial ausgerichteten Pfeile C, welche eine durch das Ringelement 20 auf das Verbindungselement 30 wirkende Kraft andeuten.

Die Figur 5 zeigt ein bevorzugtes Ausführungsbeispiel des Hohlfaseranschluss 1 mit dem Ringelement 20 und dem Verbindungselement 30, wobei an dem Ringelement 20 die Kraft im Wesentlichen in Richtung der Faserlängsachse A wirkt, und an dem Verbindungselement 30 wirkt die durch das Ringelement 20 aufgebrachte Kraft zwar auch etwas in Richtung der Faserlängsachse A, jedoch überwiegend in radialer Richtung, also nahezu orthogonal zur Faserlängsachse A. An dem Ringelement 20 ist die vordere Stirnseite 24 erkennbar, welche dazu vorgesehen ist, mit der Anlagefläche 31 des Verbinders 30 in Kontakt gebracht zu werden. Über diese Schnittstelle können hohe axiale Kräfte vom Anschlussteil 10 auf den Gehäuseanschluss 41 (vgl. Fig. 3) übertragen werden, so dass auch eine dichtende Verbindung zwischen dem Verbindungselement 30 und einem Gehäuse sichergestellt werden kann. Die axialen Kräfte werden in das Ringelement 20 über die hintere Stirnseite 24a eingeleitet, insbesondere über eine Berührfläche eines Anschlussteils. Das Ringelement 20 weist ferner die Pressfläche 25 auf, welche in den Innenkonus 22 übergeht bzw. diesen umfasst. Der Innenkonus 22 ist radial nach außen geneigt, d.h. er weist gegenüber der Faserlängsachse A in Richtung des Verbinders 30 einen kleinen Winkel im Bereich von ca. 5 bis 35 oder bis 40° auf. Der Innenkonus 22 nimmt wie dargestellt in etwa die Hälfte der Breite des Rings 20 ein, und die andere Hälfte wird durch eine im Wesentlichen parallel zu der Faserlängsachse A bzw. einer Symmetrieachse des Ringelements 20 ausgerichteten Fläche als Teil der Pressfläche 25 gebildet. Die Pressfläche 25 geht über eine Fase 23 in die hintere Stirnseite 24a über. Die Fase 23 kann z.B. dazu dienen, eine gratfreie Kante an der Schnittstelle zu einem Anschlussteil bereitzustellen, so dass bei einer eventuellen Relativbewegung zwischen einem Anschlussteil und dem Ringelement 20 keine hohe Reibkraft hervorgerufen wird.

Das Verbindungselement 30 weist wie erwähnt zwei Bereiche mit einer jeweils eigenständigen Funktion auf, zum einen den ersten Bereich oder Pressbereich 30a und zum anderen den zweiten Bereich 30b. Die Bereiche 30a, 30b sind hier bildlich gesprochen über die Anlagefläche 31 örtlich voneinander trennbar, wobei der Pressbereich 30a dazu vorgesehen ist, von dem Ringelement 20 ausgeübte Kräfte über den Abschnitt 35 auf eine Faser (nicht dargestellt) zu übertragen. In dem Pressbereich 30a ist der die Durchgangsöffnung 350 begrenzende Abschnitt 35 in Form einer umlaufenden Wandung angeordnet, wie dargestellt im Wesentlichen in der vom Absatz 32 abgewandten Hälfte des Pressbereichs 30a angeordneten Hälfte, wobei der Abschnitt 35 den Steg 351 aufweist, an welchem eine erste Dichtfläche 351 a im Wesentlichen die Dicht- und Haltefunktion einer Faser übernehmen kann.

Ferner ist an dem die Durchgangsöffnung 350 begrenzenden Abschnitt 35 eine zweite Dichtfläche 35a ausgebildet, welche wie dargestellt gegenüber dem Steg 351 größere Innenabmessungen aufweist. Dadurch kann der Steg 351 ggf. eine größere Kraft oder zumindest einen höheren Druck auf die Hohlfaser 50 ausüben als die zweite Dichtfläche 35a; jedoch kann die zweite Dichtfläche 35a z.B. die Funktion einer Zentrierung zusätzlich sicherstellen. An der zum Ringelement 20 weisenden Seite des Pressbereichs 30a ist die Außenfase 33 vorgesehen, welche den gleichen Winkel gegenüber der Faserlängsachse A aufweisen kann wie der Innenkonus 22 des Rings, so dass eine Montage des Rings 20 auf das Verbindungselement 30 auf einfache Weise möglich ist. Insbesondere kann das Ringelement 20 dank der Außenfase 33 auf dem Verbindungselement aufgesteckt und dort ohne weitere Halterung positioniert werden, bevor es über irgendein Anschlussteil auf das Verbindungselement 30 ganz aufgeschoben bzw. aufgepresst wird. Die Außenfase 33 ist besonders dann von Vorteil, wenn eine Ausrichtung eines Anschlussteils gegenüber einem rohrartigen Gehäuseteil dadurch sichergestellt werden soll, dass das Anschlussteil über eine gewisse Strecke erst auf ein Gewinde an einem Gehäuseanschluss aufgeschraubt wird, bevor es in Kontakt mit dem Ringelement 20 gerät. Somit kann durch die Fase 33 auch einem Verkanten des Ringelements 20 vorgebeugt werden, selbst wenn das Ringelement 20 kurzzeitig nicht mehr zugänglich ist, bevor es aufgeschoben wird.

Das Verbindungselement 30 weist ferner die zweite Mantelfläche 38 an dem Absatz 32 auf, über welche eine radiale Verdreh-Sicherung des Verbinders 30 in irgendeinem Gehäuse sichergestellt werden kann. Diese Verdreh-Sicherung kann z. B. über eine besonders rauhe Oberfläche der zweiten Mantelfläche 38 in Verbindung mit einem Presssitz in einem Gehäuse erfolgen, es kann jedoch auch ein Formschluss vorliegen, insbesondere dann, wenn der Absatz 32 nicht zylindrisch ausgeführt ist, sondern mit einer verzahnten oder anderswie strukturierten zweiten Mantelfläche 38. Die zweite Mantelfläche 38 geht über die vordere Stirnseite 34 des Verbindungselementes 30 in das rohrförmige Ende 37 über, mittels welchem das Verbindungselement 30 in einem rohrartigen Gehäuseteil bzw. einer Vorrichtung zentriert werden kann. Die innere Mantelfläche 36 bildet dadurch, dass sie nur geringfügig kleinere Innenabmessungen aufweist als die Außenabmessungen des rohrförmigen Endes 37, mit dem rohrförmigen Ende 37 ein im Vergleich zu anderen Wandstärken des Verbindungselements 30 eher dünnwandiges Anschluss-Stück.

Die innere Mantelfläche 36 geht über einen innenliegenden Fasenübergang 39, welcher bereits wie dargestellt in dem Pressbereich 30a angeordnet ist, in den Steg 351 über. Dieser innenliegende Fasenübergang 39 kann zwar konstruktionsbedingt sein, ihm kann jedoch auch dahingehend eine Funktion zukommen, dass sein Winkel bzw. seine Länge Auswirkungen darauf hat, ob bzw. wie stark in dem Pressbereich 30a ausgeübte im Wesentlichen radiale Kräfte auf den zweiten Bereich 30b übertragen werden oder nicht. Wie dargestellt, ist der innenliegende Fasenübergang 39 verhältnismäßig steil, d.h. größer als 45° gegenüber der Faserlängsachse A ausgeführt, und er schließt an einer Stelle in dem Pressbereich 30a ab, welche von dem Absatz 32 bzw. der Anlagefläche 31 einen gewissen Mindestabstand hat, so dass hier auch aufgrund der Wandstärken und der Positionen und geometrischen Verhältnisse eine Trennung des Pressbereichs 30a von dem zweiten Bereich 30b erfolgen kann. Der Bereich zwischen dem innenliegenden Fasenübergang 39 und dem Absatz 32 ist hier als Zwischenbereich 30c bezeichnet, welcher nur eine geringe Biegesteifigkeit, aber eine hohe Drucksteifigkeit aufweist. Ist ein Zwischenbereich 30c vorgesehen, so kann der erste Bereich 30a auch als ein Bereich aufgefasst werden, welcher seitlich an den Zwischenbereich 30c anschließt, diesen also nicht umfasst. Denn ein Zwischenbereich 30c ist dazu vorgesehen, dass in ihm vornehmlich Biegekräfte übertragen werden und nicht Radialdruckkräfte.

Wie in Fig. 5 ferner erkennbar ist, liegt der Zwischenbereich 30c bereits im Bereich der inneren Mantelfläche 36 auf und ist derjenige Abschnitt bzw. Teil des ersten Bereichs 30a, welcher die geringste Wandstärke aufweist. Bei einer derartigen Ausführung der geometrischen Verhältnisse kann auf besonders wirkungsvolle Weise ein auf die erste Mantelfläche 33a des Verbindungselementes 30 ausgeübter Druck auf den Abschnitt 35 übertragen werden, ohne dass sich eine Verformung in dem ersten Bereich 30a spürbar auf die zweite Mantelfläche 38 des zweiten Bereichs 30b überträgt. Dies ist dann auch weitgehend unabhängig von einer Materialwahl für das bzw. die Materialien des Verbindungselements 30 möglich.

Die Figur 6 zeigt die Komponenten der Figur 5 in montiertem Zustand. Der Hohlfaseranschluss 1 ist nun in Verbindung mit der Hohlfaser 50 dargestellt, und es ist ersichtlich, auf welche Weise sich eine vom Ringelement 20 auf das Verbindungselement 30 ausgeübte Kraft auf die Hohlfaser 50 auswirkt. Die Hohlfaser 50 ist mit ihrer äußeren Mantelfläche 51 innerhalb der Durchgangsöffnung 350 in dem Pressbereich bzw. Abschnitt des Verbinders 30 gehalten. Aufgrund der Neigung bzw. Winkellage des Innenkonus 22 am Ringelement 20 kann in Verbindung mit der Länge des Innenkonus 22 bzw. der Breite des Rings 20 der Kraftwirkungspunkt mit der Lage des Stegs in Übereinstimmung gebracht werden, insbesondere in Abhängigkeit der Lage des Rings 20 auf dem Verbindungselement 30. Dies ist durch entsprechende Pfeile in Richtung der Kraftwirkung angedeutet. Durch den Steg 351 aber auch durch die zweite Dichtfläche wird die Hohlfaser 50 sowohl mit ihrer äußeren Mantelfläche 51 als auch mit ihrer inneren Mantelfläche 52 im Querschnitt verändert, in diesem Falle zusammengedrückt. Die Querschnittsverringerung der Hohlfaser 50 ist dabei an der Stelle des Stegs 351 am bedeutendsten, also an derjenigen Stelle, auf welche die Kraftvektoren ausgerichtet sind. Eine radiale Kraft kann über den gesamten Bereich der Durchgangsöffnung 350 übertragen werden. Im montierten Zustand liegt das Ringelement 20 mit seiner vorderen Stirnseite 24 an der Anlagefläche 31 des Absatzes 32 an. Dabei überlappt das Ringelement 20 auf der gegenüberliegenden Seite das Verbindungselement 30. Auf diese Weise kann eine Kraft auf das Verbindungselement 30 über einen breiten Bereich des Pressbereichs 30a homogen ausgeübt werden und gleichzeitig in Abhängigkeit des Winkels des Innenkonus 22 ein Kraftfluss auf den Steg fokussiert werden.

Der Steg 351 zur Querschnittsverengung des inneren Durchmessers der Dichtflächen 35a, 351 a des Verbindungselements 30 ist an einer Stelle einer definierten, ggf. maximalen Presskraft angeordnet. Dieser Steg 351 kann die Faser 50 durch die vorgenannte Kraftwirkung gegen einen Druck von bis zu 30 bar abdichten. Gleichzeitig kann ein Verrutschen der Faser 50 innerhalb des Verbindungselements 30 in axialer Richtung verhindert werden. Durch die gleichmäßig von außen aufgebrachte Kraft wird die Faser 50 relativ zu allen anderen Teilen des Gehäuses 40 bzw. der Kartusche koaxial gelagert. Die genaue Konzentrizität der Faser 50 ist von hoher Wichtigkeit, denn wie bekannt ist, wird nur eine sehr schlechte Trennung erzielt, wenn die Rotationssymmetrie nur schlecht oder nicht gegeben ist. Denn in diesen Fällen besteht die Gefahr, dass ein Versatz der Faser 50 gegenüber der Zuleitung vorliegt, so dass dadurch auftretende Turbolenzen die Fokussierung/Relaxierung der Probe am Einlass verschlechtern und zudem bereits getrennte Fraktionen am Auslass vermischt werden.

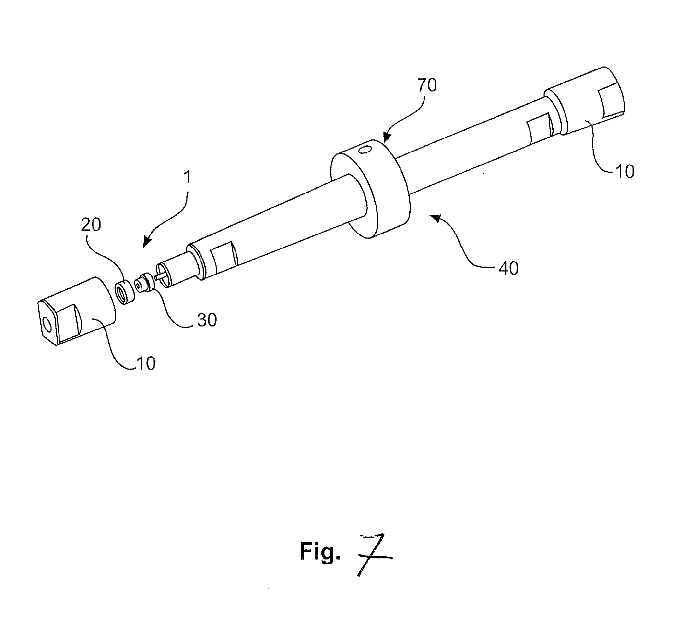

Figur 7 zeigt den Hohlfaseranschluss 1 in Verbindung mit dem rohrförmigen Gehäuse 40 sowie zwei Anschlussteilen 10, mit dem einen Anschlussteil 10 in bereits montiertem Zustand und dem anderen Anschlussteil 10 in auseinandergezogener Darstellung zusammen mit dem Ringelement 20 und dem Verbindungselement 30. Das dargestellte Gehäuse 40 kann z.B. Teil einer Fraktionier-Vorrichtung sein. In Verbindung mit den Figuren 2 und 3 ist erkennbar, dass die Hohlfaser 50 im Durchmesser wesentlich kleiner ist als das Gehäuse 40, so dass sich ein Volumen 60 bzw. Radialvolumen dazwischen ergibt, in welchem ein Querstrom fließt, der über einen kragenförmigen Anschluss 70 abgeführt wird. Zur Anpassung auf verschiedene Applikationen kann die Länge der Kartusche 40 auf einfache Weise angepasst werden.

Das Ringelement 20, das Verbindungselement 30 und die Hohlfaser sind nach dem vollständigen Anziehen des Anschlussteils 10 so miteinander verbunden, dass sie nicht mehr auf einfache Weise voneinander getrennt werden können. Sollte dies dennoch erforderlich sein, so ist es von Vorteil, wenn das Ringelement 20 eine größere radiale Erstreckung aufweist als das Verbindungselement 30, so dass das Ringelement 20 mit einem entsprechenden Werkzeug, welches an der vorderen Stirnseite 24 angreift, dann von dem Verbindungselement 30 gezogen werden kann. Eine vollständige Kartusche 40 kann zwei gleichartige Anschlüsse an der Einlass- bzw. Auslassseite des Gehäuseanschlusses enthalten. Sind beide Anschlüsse verschlossen worden und damit die Hohlfaser in dem jeweiligen Verbindungselement 30 verpresst, kann die Hohlfaser üblicherweise nicht mehr ausgebaut werden, zumindest nicht zerstörungsfrei.

Der erfindungsgemäße Anschluss zur Verbindung einer Hohlfaser 50 mit einem rohrartigen Gehäuseteil 40 hat sich für verschiedene Faserdurchmesser als geeignet erwiesen. Bei Anpassungen der Bohrungsdurchmesser ist es vorteilhaft, enge Toleranzgrenzen einzuhalten, denn bereits Abweichungen im Bereich von 2/100 Millimeter können die abdichtende Wirkung mindern. Für den Fall, dass für eine Anwendung der Raum für den Querstrom zwischen der Faser 50 und dem Gehäuse 40 entsprechend eines Teils des Volumens 60 sehr groß ist, kann eine Füllung des Volumens 60 mit feinen Glas- oder Kunststoffkugeln erfolgen, z.B. mit einem Durchmesser von etwa 0.5 mm. Der Querstrom-Anschluss 70 an der Kartusche 40 kann als Standardanschluss ausgeführt sein.

### Bezugszeichenliste

- 1: Hohlfaseranschluss

- 10: Anschlussteil
- 11: Anschlussteil-Innengewinde
- 12: Berührfläche

- 20: Ringelement
- 22: Innenkonus
- 23: Innenfase
- 24: vordere Stirnseite des Ringelements
- 24a: hintere Stirnseite des Ringelements
- 25: Pressfläche

- 30: Verbindungselement
- 30a: erster Bereich
- 30b: zweiter Bereich
- 30c: Zwischenbereich
- 31: Anlagefläche
- 32: Absatz
- 33: Außenfase
- 33a: erste Mantelfläche des Verbinders
- 33b: zusammengedrückter Bereich
- 34: vordere Stirnseite des Verbindungselementes
- 35: Abschnitt
- 350: Durchgangsöffnung
- 35a: zweite Dichtfläche
- 351: Steg
- 351a: erste Dichtfläche
- 36: innere Mantelfläche des Verbinders
- 37: rohrförmiges Ende
- 38: zweite Mantelfläche des Verbinders
- 39: innenliegender Fasenübergang

- 40: rohrartiger Gehäuseteil
- 41: Gehäuseanschluss
- 42: Außengewinde
- 43a, 43b: Aussparung
- 44a, 44b: Vorsprung

- 50: Faser
- 51: äußere Mantelfläche der Hohlfaser
- 52: innere Mantelfläche der Hohlfaser

- 60: Volumen

- 70: kragenförmiger Anschluss

- A: Faserlängsachse
- B: axiale Pfeile
- C: radial ausgerichtete Pfeile

## Patentansprüche

1. Hohlfaseranschluss (1) für ein Ende einer für eine Feldflussfraktionierung geeigneten Hohlfaser (50), mit einem Verbindungselement (30), das eine Durchgangsöffnung (350) zur Aufnahme des Endes der Hohlfaser (50) aufweist,
**gekennzeichnet durch** ein am Verbindungselement (30) montierbares Ringelement (20), wobei das Ringelement (20) und das Verbindungselement (30) derart gestaltet sind, dass die Montage des Ringelementes (20) am Verbindungselement (30) eine Verkleinerung des Querschnittes der Durchgangsöffnung (350) im Verbindungselement (30) für eine dichtende Verbindung des Endes der Hohlfaser (50) mit einem die Durchgangsöffnung (350) begrenzenden Abschnitt (35) des Verbindungselementes (30) bewirkt.

2. Hohlfaseranschluss nach Anspruch 1, **dadurch gekennzeichnet, dass** das Ringelement (20) in montiertem Zustand im Wesentlichen in Faserlängsachse (A) aufgeschoben auf dem Verbindungselement (30) angeordnet ist.

3. Hohlfaseranschluss nach Anspruch 1 oder 2, **dadurch gekennzeichnet, dass** die in montiertem Zustand des Ringelements (20) auf das Verbindungselement wirkenden Kräfte im Wesentlichen radial zur Faserlängsachse (A) in Richtung auf das Ende der Hohlfaser (50) ausgerichtet sind.

4. Hohlfaseranschluss nach mindestens einem der Ansprüche 1 bis 3, **dadurch gekennzeichnet, dass** das Verbindungselement (30) einen ersten Bereich (30a) aufweist, welcher dazu ausgebildet ist, radiale Druckkräfte auf die Hohlfaser (50) zu übertragen.

5. Hohlfaseranschluss nach Anspruch 4, **dadurch gekennzeichnet, dass** das Verbindungselement (30) zumindest im ersten Bereich (30a) aus einem kompressiblen Material ausgeführt ist.

6. Hohlfaseranschluss nach Anspruch 4 oder 5, **dadurch gekennzeichnet, dass** der erste Bereich (30a) aus einem Material ausgeführt ist, welches weitgehend inkompressibel gegenüber axialen Kräften in Richtung der Faserlängsachse (A) ist.

7. Hohlfaseranschluss nach mindestens einem der Ansprüche 4 bis 6, **dadurch gekennzeichnet, dass** der die Durchgangsöffnung (350) begrenzende Abschnitt (35) im Wesentlichen vollständig in dem ersten Bereich (30a) enthalten ist.

8. Hohlfaseranschluss nach mindestens einem der Ansprüche 1 bis 7, **dadurch gekennzeichnet, dass** das Ringelement (20) eine Innenfläche aufweist, die sich zumindest in einem Abschnitt konisch aufweitet, so dass ein Innenkonus (22) gebildet ist.

9. Hohlfaseranschluss nach Anspruch 8, **dadurch gekennzeichnet, dass** die Innenfläche des Innenkonus (22) in einem Winkel kleiner 45 Grad gegenüber einer Längsachse des Ringelements geneigt ist.

10. Hohlfaseranschluss nach mindestens einem der Ansprüche 1 bis 9, **dadurch gekennzeichnet, dass** das Ringelement (20) eine axiale Länge in Richtung der Faserlängsachse (A) aufweist, welche größer ist als die axiale Länge einer ersten Mantelfläche (33a) des Verbindungselements (30) in dem ersten Bereich (30a).

11. Hohlfaseranschluss nach mindestens einem der Ansprüche 1 bis 10, **dadurch gekennzeichnet, dass** das Verbindungselement (30) an dem die Durchgangsöffnung (350) begrenzenden Abschnitt (35) einen nach innen vorspringenden Steg (351) aufweist, welcher eine erste Dichtfläche (351a) definiert, die so ausgebildet ist, in montiertem Zustand des Ringelements (20) am Verbindungselement (30) an einer äußeren Mantelfläche (51) einer Hohlfaser (50) in dichtende Anlage zu gelangen.

12. Hohlfaseranschluss nach Anspruch 11, **dadurch gekennzeichnet, dass** die erste Dichtfläche (351 a) eine im Wesentlichen zylindrische Form aufweist, deren Rundheit vorzugsweise von einer idealen Zylinderform um weniger als 2/100 Millimeter abweicht.

13. Hohlfaseranschluss nach Anspruch 12, **dadurch gekennzeichnet, dass** der Steg (351), in axialer Richtung betrachtet, im Wesentlichen mittig im ersten Bereich (30a) angeordnet ist.

14. Hohlfaseranschluss nach mindestens einem der Ansprüche 1 bis 13, **dadurch gekennzeichnet, dass** an einer Außenseite des Verbindungselementes (30) ein Absatz (32) angeordnet ist, der als Anschlag für das Ringelement (20) dient.

15. Hohlfaseranschluss nach mindestens einem der Ansprüche 1 bis 14, **dadurch gekennzeichnet, dass** ein Anschlussteil (10) für eine Kopplung mit einem die Hohlfaser (50) umgebenden rohrartigen Gehäuseteil (40) unter Einschluss des Ringelements (20) sowie des Verbindungselements (30) vorgesehen ist.

16. Hohlfaseranschluss nach Anspruch 15, **dadurch gekennzeichnet, dass** der Hohlfaseranschluss (1) so ausgebildet ist, eine abdichtende Verbindung zwischen einem Ende der Hohlfaser (50) und dem Verbindungselement (30) sowie zwischen dem Verbindungselement (30) und dem die Hohlfaser aufnehmenden rohrartigen Gehäuseteil (40) herzustellen, indem die abdichtende Verbindung zwischen einem Ende der Hohlfaser (50) und dem Verbindungselement (30) über den die Durchgangsöffnung (350) begrenzenden Abschnitt (35) mittels des Anschlussteils (10) durch axiales Verschieben des Ringelements (20) gegenüber dem Verbindungselement (30) über radial wirkende Kräfte herzustellen ist und indem eine abdichtende Verbindung zwischen dem Verbindungselement (30) und dem rohrartigen Gehäuseteil (40) über eine vordere Stirnseite (34) des Verbindungselements (30) über axial wirkende Kräfte herzustellen ist.

17. Hohlfaseranschluss nach Anspruch 16, **dadurch gekennzeichnet, dass** das Anschlussteil (10) als Anschlussmutter für eine Schraubverbindung mit dem rohrartigen Gehäuseteil (40) ausgeführt ist.
